# EUROPEAN PATENT APPLICATION

(11) **EP 1 020 650 A2**
(43) Date of publication of application: **19.07.2000**
(21) Application number: 00610003.6
(22) Date of filing: 17.01.2000
(51) Int. Cl.: F16B 19/10

(54) **A coupling element**

(30) Priority: 18.01.1999 DK 5799
(71) Applicant: Avanti Stigefabrik A/S, 3400 Hillerod (DK)
(72) Inventor: Petersen, Peter Gunnar, 3480 Fredensborg (DK)
(74) Representative: Sundien, Thomas

(57) **Zusammenfassung**

Die Erfindung betrifft eine Verbindungsvorrichtung, die zwei Steckelemente mit jeweils einem Schaft (1) und einem Kopf (2) umfaßt, wobei die Schäfte für das Einführen in eine Öffnung mit Innenwänden von jeweils ihrer Seite in zu verbindende Werkstücke vorgesehen sind und Eingriffsorgane (6,7) aufweisen, die bei dem Einführen der Schäfte für das Zusammenwirken zum Festhalten der beiden Steckelemente relativ zueinander vorgesehen sind. Die Erfindung ist dadurch eigentümlich, daß die beiden Steckelemente identisch sind, und dadurch, daß die Eingriffsorgane (6,7) für das unverdrehbare Festhalten der Schäfte relativ zueinander vorgesehen sind.

## Description

Die Erfindung betrifft eine Verbindungsvorrichtung, die zwei identische, einen Schaft und einen Kopf aufweisende Steckelemente umfaßt, wobei die Schäfte zum Einführen von jeweils ihrer Seite in eine mit Innenwänden versehene Öffnung in zu verbindende Werkstücke vorgesehen sind und Eingriffsorgane aufweisen, die beim Einführen der Schäfte für das Zusammenwirken zum unverdrehbaren Festhalten der beiden Steckelemente relativ zueinander vorgesehen sind.

Solche Verbindungsvorrichtungen umfassen üblicherweise einen Einsteckteil und einen Buchseteil, wobei der Buchseteil auf der Außenseite und der Einsteckteil auf der Innenseite Eingriffsorgane aufweisen, die die beiden Teile entweder permanent oder auslösbar relativ zueinander festhalten. Hierbei werden die Verbindungsvorrichtungen zwei unterschiedliche Komponenten umfassen und es müssen somit zwei unterschiedliche Werkzeuge für die Herstellung eingesetzt werden, was sowohl teuer als auch schwierig ist. Desweiteren werden die Einsteck- und Buchseteile am häufigsten drehsymmetrisch eingerichtet und dadurch wird es beim Einsatz von Verbindungsvorrichtungen bekannter Art zur Bildung von verdrehbaren Gliedverbindungen unklar sein, ob die Drehbewegung zwischen den Einzelteilen der Verbindungsvorrichtung oder zwischen ihnen und dem umgebenden Werkstoff erfolgt. Damit ist es unklar, wo der Verschleiß entsteht, da die Friktionsverhältnisse nicht voll unter Kontrolle stehen. Desweiteren werden die bekannten Verbindungsvorrichtungen zylindrische Steckteile aufweisen, was keine optimale Nutzung der Festigkeit des Werkstoffs ermöglicht. Bei der Erfindung wird eine Verbindung vorgesehen, die die Festigkeit des Werkstoffs optimal nutzt und die gleichzeitig die obigen Nachteile der bekannten Verbindungen vermeidet.

Diese Aufgabe wird durch eine Verbindung der eingangs genannten Art gelöst, bei der die beiden Schaftteile nach dem Verbinden einen Zylinderkörper mit einer Trennfläche zwischen den beiden Schaftteilen ausmachen, die in einem Winkel relativ zur Zylinderachse des Zylinderkörpers verläuft. Durch den Verlauf der Trennfläche in einem Winkel wird erzielt, daß jeder Schaftteil sich auf die Spitze zu verjüngt und hierdurch wird gewährleistet, daß der Schaftteil den größten Querschnitt in der Nähe des Kopfes aufweist. Die durch die Schaftteile übertragene Zugkraft wird von der Spitze bis zum Kopf steigend sein; da die Kraft an der ganzen Trennfläche entlang übertragen wird und da gleichzeitig die Querschnittsfläche des Schafts auf den Kopf zu steigend ist, wird eine optimale Nutzung der Tragfähigkeit des eingesetzten Werkstoffs erzielt.

Wenn die beiden Teile wie genannt identisch sind, lassen diese sich in ein und derselben Form herstellen, und von großem Vorteil wird dies insbesondere sein, wenn die Teile aus Kunststoff hergestellt sind, da die Kosten bei der Konstruktion der Spritzformen außerordentlich hoch sind. Dadurch daß die beiden Teile sich nicht relativ zueinander drehen können, wird gewährleistet, daß die Bewegung bei dem Anfertigen von beweglichen Gliedern zwischen den beiden Teilen der Verbindungsvorrichtung und den Innenwänden der umgebenden Öffnung erfolgen wird.

Wie in Anspruch 2 genannt ist die Öffnung, in die die beiden Steckelemente eingeführt werden, mit nachgiebigen Innenwänden ausgeführt, die bei dem Einführen der Schäfte ein federndes Erweitern der Öffnung erlauben und nachfolgend bei dem Zurückfedern aus der erweiterten Stellung den Eingriff zwischen den Eingriffsorganen der Schäfte festhalten. Hierdurch wird erzielt, daß relativ starre und haltbare Steckelemente eingesetzt werden können, ohne daß sie bei dem Verbinden beschädigt werden, weil die erforderliche Verformung der Werkstoffe in den nachgiebigen Wänden erfolgt.

Dadurch daß die Eingriffsorgane der Schäfte, wie in Anspruch 3 genannt, einen oder mehrere Widerhaken umfassen, die dafür vorgesehen sind, die Zueinanderbewegung der Schäfte in der Längsrichtung der Schäfte zu erlauben und nach dem Eingriff die gegenseitige Auseinanderbewegung in der Längsrichtung der Schäfte zu verhindern, wird ein zuverlässiges Festhalten der beiden Elemente relativ zueinander erzielt.

Eine vorteilhafte Ausbildung der Widerhaken als ein Sägezahnprofil, wie in Anspruch 4 genannt, mit Gleitflächen, die im Verhältnis zur Längsrichtung des Schafts etwas winkelig verlaufen, und mit jeder Gleitfläche benachbarten Gegenhaltsflächen, die im Verhältnis zur Richtung senkrecht zur Längsrichtung des Schafts etwas winkelig verlaufen, bewirkt beim Verbinden der Teile ein Mindestmaß an Friktion und nach dem Einführen in die Öffnung einen sicheren Eingriff.

Dadurch daß, wie in Anspruch 5 genannt, der Kopf der Verbindungsvorrichtung kuppelförmig ist, wird erzielt, daß der Benutzer die beiden Teile der Verbindung nicht versehentlich auseinanderzuschrauben versucht, was eine Zerstörung der Verbindung zur Folge haben würde.

Anspruch 6 schlägt einen zweckmäßigen Werkstoff für die Ausbildung der Steckelemente vor.

In einem Aspekt der Erfindung betrifft diese zugleich nach Anspruch 7 den Einsatz der Verbindungsvorrichtung nach Anspruch 1 bis 6 zur Bildung einer verdrehbaren Gliedverbindung zwischen gegenseitig beweglichen Teilen einer Leiter. Durch diesen Einsatz der Verbindungsvorrichtung wird die Möglichkeit geschaffen, mit einer Mindestzahl von Elementen die einzelnen Elemente einer Leiter, beispielsweise die beiden Holme einer Bockleiter, oder die verschiedenen gegenseitig gelenkig verbundenen Teile einer Stehleiter zu verbinden. Besonders geeignet ist die Verbindungsvorrichtung bei der Herstellung von Leitern ohne metallische Teile, bei der es bisher schwierig gewesen ist, mit alternativen Werkstoffen, wie z.B. bewehrtem Kunststoff, den erforderlichen Verschleiß- und Festigkeitseigenschaften gerecht zu werden. Durch den Einsatz einer Verbindungsvorrichtung nach Ansprüchen 1 bis 6 wird somit sowohl eine sichere als auch preiswerte Verbindung der Einzelteile der Leiter erzielt und bei der Verwendung der erforderlichen Fasermenge im Kunststoff entstehen auch keine Schwierigkeiten mit der Festigkeit.

In einem weiteren Aspekt der Erfindung betrifft diese nach Anspruch 8 eine Verbindungsvorrichtung zum Verbinden von Leiterteilen, die zwei Verbindungsteile mit jeweils durchgehender Öffnung mit Innenwänden aufweisen, welche Öffnungen für ihre gegenseitige Fluchtung zur Aufnahme eines Steckelementes im Hinblick auf die Bildung der Verbindung zwischen den Verbindungsteilen vorgesehen sind. Bekannte Verbindungsvorrichtungen für Steckteile umfassen eine Anzahl von Teilen: Gewindestange, Bolzen und Unterlegscheiben und die Verbindung all dieser Einzelteile ist ein langwieriges und schwieriges Verfahren.

Eigentümlich ist die Verbindungsvorrichtung dadurch, daß das Steckelement aus einem Kompositwerkstoff besteht und zwei Teile mit jeweils einem Schaft und einem Kopf umfaßt, wobei die Schäfte für das Einführen von jeweils ihrer Seite in die jeweiligen durchgehenden Öffnungen in die Verbindungsteile vorgesehen sind und Eingriffsorgane aufweisen, die bei dem Einführen der Schäfte für das Zusammenwirken zum Festhalten der beiden Teile relativ zueinander vorgesehen sind und daß die beiden Teile identisch sind und daß die Eingriffsorgane für das unverdrehbare Festhalten der Schäfte relativ zueinander vorgesehen sind. Durch diese Einrichtung der Verbindung wird die Anzahl der Einzelteile auf ein absolutes Mindestmaß gehalten und die Herstellung der Verbindung an sich kann jetzt dadurch überaus schnell erfolgen, daß die beiden Teile des Steckelementes in jeweils ihre Öffnung des Verbindungsteils eingeführt werden und die Köpfe aufeinander zu gedrückt werden, was die Eingriffsorgane in einen gegenseitigen unverdrehbaren Eingriff bringt, wodurch die Verbindung angefertigt wird.

Eine Ausführungsform der Erfindung wird nachfolgend unter Hinweis auf die Figuren näher beschrieben, wobei
Fig. 1 eine Seitenansicht der beiden verbundenen Steckelemente zeigt,
Fig. 2 eine Seitenansicht einer verdrehbaren Gliedverbindung zeigt,
Fig. 3 einen Schnitt durch die Gliedverbindung in Fig. 2 zeigt, bei der der eine der beiden zu verbindenden Teile gemeinsam mit den beiden Steckteilen vor dem Verbinden gezeigt werden, und
Fig. 4 eine Ansicht eines Steckelementes von dem Steckende aus zeigt.

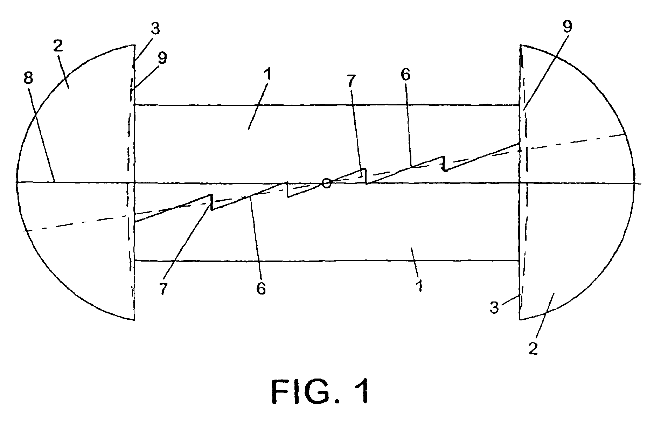

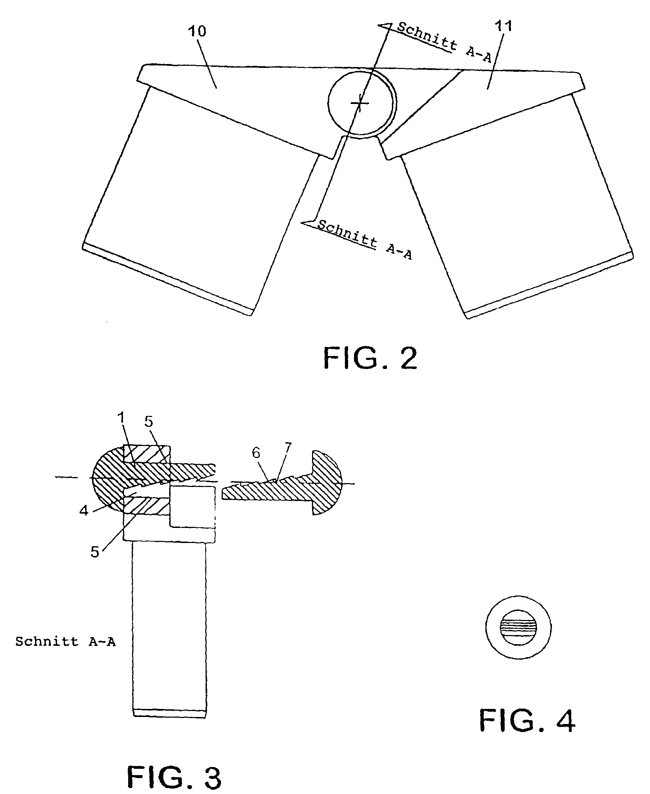

Die Steckelemente in Fig. 1 weisen jeweils einen Schaft 1 und einen Kopf 2 auf, wobei der Kopf 2 einen größeren Umfang hat als der Schaft. Der Kopf weist folglich eine herausragende Flansch 3 auf, die bei dem Verbinden von 2 Teilen, wie in Fig. 3 gezeigt, auf die Oberfläche im Bereich um die Öffnung 4 zur Anlage kommt. Jeder Schaft weist eine schräg zur Längsachse 8 verlaufende Fläche auf und ist mit Widerhaken in Form eines Sägezahnprofils versehen, das schwach winkelig zur Längsachse verlaufende Gleitflächen 6 und den Gleitflächen 6 benachbarte Gegenhaltsflächen 7 umfaßt, wobei die Gegenhaltsflächen schwach winkelig zur Richtung senkrecht zur Längsachse verlaufen.

Die Öffnung 4 weist Innenwände 5 auf, die eine gewisse elastische Nachgiebigkeit besitzen, so daß sie, wenn die Schäfte 1 der Steckelemente von jeweils ihrer Seite aufeinander zu gedrückt werden, es den Eingriffsorganen ermöglichen werden, zum Eingriff zu kommen, wenn auch dies nur durch das Erweitern der Öffnung senkrecht zur Längsrichtung der Schäfte möglich ist. Besonders zweckmäßig ist diese Ausbildung beim Verbinden von Leiterelementen, bei dem hohe Anforderungen an die Festigkeit hiervon gestellt werden, weshalb für die Herstellung der Steckelemente ein Kunststoff hoher Festigkeit und eines hohen Fasergehalts verwendet wird, und deshalb wird des Steckelementes Schaftteil an sich nicht die erforderliche Flexibilität besitzen, die den Eingriff allein durch die Nachgiebigkeit des Steckelementes ermöglicht. Im Rahmen der Erfindung liegt natürlich auch die Ausbildung der Steckelemente mit der notwendigen Flexibilität, damit sie für das Verbinden starrer Elemente, wie z.B. Stahlelemente, eingesetzt werden können, ohne daß das Sägezahnprofil beim Verbinden beschädigt wird.

Bei der Bildung der verdrehbaren Gliedverbindung, wie in Fig. 2 und 3 gezeigt, ist es erforderlich, daß die Schäfte 1 beim Verbinden einen zylindrischen Körper bilden, bei Verbindungen, bei denen Verdrehbarkeit nicht erforderlich ist, können die Schäfte 1 jedoch nach dem Verbinden einen viereckigen oder in sonstiger Weise nicht-kreisförmigen Körper ausmachen, wobei die Öffnung natürlich einen entsprechenden Grundriß aufweisen muß. In den gezeigten Beispielen weist jedes Steckelement einen Schaftteil auf, es ist jedoch im Rahmen der Erfindung möglich, die Schäfte für jeden Teil mit mehreren gesonderten Schaftteilen auszubilden.

Der Hauptteil ist, wie es aus Fig. 1 und 3 zu ersehen sein wird, kuppelförmig und es wird hiermit Schwierigkeiten bereiten, ihn mit einem Werkzeug zu ergreifen, was von Bedeutung ist, da eine gewisse Gefahr dafür besteht, daß Personen durch den Versuch, die beiden Hauptteile auseinanderzuschrauben, die Verbindung versehentlich zerstören werden, was natürlich nicht möglich ist, ohne die Verbindung zu zerstören. Der Kopf kann zudem, wie es aus Fig. 1 bei der Linie 9 ersichtlich ist, mit einer schwachen Vertiefung der Flansch ausgebildet werden, wodurch diese schwach federnd wird, was bei gewissen Konstruktionen vorteilhaft sein kann, da dadurch gesichert wird, daß die durch die Verbindungsvorrichtung verbundenen Teile mit einer gewissen Federkraft zusammengehalten werden.

Die Verbindungsvorrichtung ist besonders anwendbar für das Verbinden von Leiterteilen und die Ausbildung nach Fig. 2 und 3 ist somit dafür vorgesehen, bei der Bildung einer Bockleiter die oberen Enden zweier Leitern gelenkig miteinander zu verbinden. Hier weist die Verbindungsvorrichtung zwei Verbindungsteile 10 und 11 auf, die verdrehbar miteinander verbunden werden sollen und zugleich mit ihrem jeweiligen Leiterteil verbunden werden sollen. Für diesen Zweck weist jeder Verbindungsteil ein durchgehendes Loch 4 auf, welche Löcher beim Zusammenstellen der beiden Verbindungsteile zum Einführen der Steckteile zum gegenseitigen Fluchten gebracht werden können. Die Löcher weisen einen Innendurchmesser auf, der dem Durchmesser des von den verbundenen Schaftteilen gebildeten Zylinders entspricht oder diesen etwas übersteigt. Zur Erzielung der erforderlichen Festigkeit des hiermit angefertigten Drehglieds muß für die Steckteile ein haltbarer Kompositwerkstoff verwendet werden, beispielsweise Polyamid mit bis zu 60% Glasfaserbewehrung. Für die Verbindungsteile kann ein Polyamid mit 15% Glasfaserbewehrung verwendet werden und diese wird dann wesentlich nachgiebiger sein als das Steckelement. Beim Verbinden der Steckelemente in dem Loch 4 müssen die Sägezahnprofile der Schaftteile im Loch 4 aneinander vorbeigeführt werden, was nur unter einer gewissen Erweiterung des Lochs möglich ist. Es muß gewährleistet werden, daß die Verbindungsteile 10 und 11 so ausgebildet sind, daß das Loch 4 sich elastisch zur Übergrösse erweitern kann, die für das Verbinden der Sägezahnprofile der Schaftteile erforderlich ist, ohne daß der das Loch umgebende Werkstoff hierdurch beschädigt wird, was mit der angeführten Polyamid-/Glasfaserkombination möglich ist.

## Patentansprüche

1. Verbindungsvorrichtung, die zwei identische, einen Schaft und einen Kopf aufweisende Steckelemente umfaßt, wobei die Schäfte zum Einführen von jeweils ihrer Seite in eine mit Innenwänden versehene Öffnung in zu verbindende Werkstücke vorgesehen sind und Eingriffsorgane aufweisen, die beim Einführen der Schäfte für das Zusammenwirken zum unverdrehbaren Festhalten der beiden Steckelemente relativ zueinander vorgesehen sind, **dadurch gekennzeichnet,** daß die beiden Schaftteile nach dem Verbinden einen Zylinderkörper ausmachen mit einer Trennfläche zwischen den beiden Schaftteilen, die winkelig zu der Zylinderachse des Zylinderkörpers verläuft.

2. Verbindungsvorrichtung nach Anspruch 1, **dadurch gekennzeichnet,** daß die Öffnung, in die die beiden Steckelemente eingeführt werden, nachgiebige Innenwände aufweist, die ein federndes Erweitern der Öffnung beim Einführen der Schäfte erlauben und nachfolgend beim Rückfedern aus der erweiterten Stellung den Eingriff zwischen den Eingriffsorganen der Schäfte festhalten.

3. Verbindungsvorrichtung nach Anspruch 1, **dadurch gekennzeichnet,** daß die Eingriffsorgane der Schäfte einen oder mehrere Widerhaken umfassen, die für die Ermöglichung der Zueinanderbewegung der Schäfte in der Längsrichtung der Schäfte und nach dem Eingriff für die Verhinderung der gegenseitigen Auseinanderbewegung in der Längsrichtung der Schäfte vorgesehen sind.

4. Verbindungsvorrichtung nach Anspruch 2, **dadurch gekennzeichnet**, daß die Widerhaken die Form eines Sägezahnprofils aufweisen, mit Gleitflächen, die im Verhältnis zur Längsrichtung des Schafts schwach winkelig verlaufen, und Gegenhaltsflächen, die jeder Gleitfläche benachbart sind und im Verhältnis zur Richtung senkrecht zur Längsrichtung des Schafts schwach winkelig verlaufen.

5. Verbindungsvorrichtung nach Anspruch 4, **dadurch gekennzeichnet**, daß der Kopf kuppelförmig ist.

6. Verbindungsvorrichtung nach Ansprüchen 1 bis 5, **dadurch gekennzeichnet,** daß die Steckelemente aus faserbewehrtem Kunststoff, vorzugsweise glasfaserbewehrtem Polyamid mit einem Fasergehalt von etwa 60% auf Volumenbasis bestehen.

7. Verwendung einer Verbindungsvorrichtung nach Ansprüchen 1 bis 6 zur Bildung einer verdrehbaren Gliedverbindung zwischen gegenseitig beweglichen Teilen einer Leiter.

8. Verbindungsvorrichtung zum Verbinden von Leiterteilen, welche zwei Verbindungsteile umfaßt, mit jeweils durchgehender Öffnung mit Innenwänden, welche Öffnungen zur Aufnahme eines Steckelementes im Hinblick auf die Bildung der Verbindung zwischen den Verbindungsteilen für das Fluchten miteinander vorgesehen sind, **dadurch gekennzeichnet,** daß das Steckelement aus Kompositwerkstoff besteht und zwei Teile mit jeweils einem Schaft und einem Kopf umfaßt, wobei die Schäfte für das Einführen in die jeweiligen durchgehenden Öffnungen von jeweils ihrer Seite in die Verbindungsteile vorgesehen sind und Eingriffsorgane aufweisen, die beim Einführen der Schäfte für das Zusammenwirken zum Festhalten der beiden Steckelemente relativ zueinander vorgesehen sind, und daß die beiden Steckelemente identisch sind und daß die Eingriffsorgane für das gegenseitig unverdrehbare Festhalten der Schäfte vorgesehen sind.

9. Verbindungsvorrichtung nach Anspruch 8, **dadurch gekennzeichnet,** daß die Öffnung, in die die beiden Steckelemente eingeführt werden, nachgiebige Innenwände aufweist, die bei dem Einführen der Schäfte ein federndes Erweitern der Öffnung erlaubt und nachfolgend beim Rückfedern aus der erweiterten Stellung den Eingriff zwischen den Eingriffsorganen der Schäfte festhält, wobei die Eingriffsorgane der Schäfte einen oder mehrere Widerhaken umfassen, die für die Ermöglichung der Zueinanderbewegung der Schäfte in der Längsrichtung der Schäfte und für die Verhinderung der gegenseitigen Auseinanderbewegung in der Längsrichtung der Schäfte nach dem Eingriff vorgesehen sind.
